# EUROPÄISCHE PATENTSCHRIFT

(11) **EP 2 557 672 B1**
(45) Veröffentlichungstag und Bekanntmachung des Hinweises auf die Patenterteilung: **12.12.2018**
(21) Anmeldenummer: 11176859.4
(22) Anmeldetag: 08.08.2011
(51) Int. Cl.: H02M 1/44, H03H 7/01, H02H 3/02

(54) **Schutzisoliertes Netzteil**
Insulated power supply
Elément de réseau à double isolation

(43) Veröffentlichungstag der Anmeldung: 13.02.2013
(73) Patentinhaber: Siemens Aktiengesellschaft, 80333 München (DE)
(72) Erfinder: Berz, Arno, 76287 Rheinstetten (DE)

(56) Entgegenhaltungen:
- JP-A- 10 294 633
- KR-A- 20110 061 869
- US-A1- 2011 128 087

## Beschreibung

Die Erfindung betrifft ein schutzisoliertes Netzteil gemäß dem Oberbegriff des Anspruchs 1.

Ein derartiges schutzisoliertes, an ein geerdetes Wechsel- oder Drehstromnetz anschließbares Netzteil ist allgemein bekannt, wobei das Netzteil zur Versorgung eines Gerätes bzw. eines Verbrauchers mit einer Gleich- oder Wechselspannung vorgesehen ist. Das Netzteil weist so genannte Y-Kondensatoren auf, welche für eine asymmetrische Funkentstörung des Netzteils vorgesehen bzw. welche erforderlich sind, um die Anforderungen im Hinblick auf das EMV-Verhalten des Netzteils zu erfüllen. Beide Leiter im Netzteil, von denen einer mit dem Phasen- und der andere mit dem Neutralleiter über geeignete Anschlüsse verbindbar ist, werden dazu mit einem Y-Kondensator symmetrisch beschaltet, um ferner für den Fall, dass das Netzteil verpolt an das Wechsel- oder Drehstromnetz angeschlossen wird, eine höhere Spannung zum Erdpotential zu vermeiden. Dies bedeutet, dass ein Y-Kondensator zwischen den Phasenleiter und das elektrisch leitende Gehäuse und ein weiterer Y-Kondensator zwischen den Neutralleiter und dieses Gehäuse geschaltet sind, wobei diese Kondensatoren eine im Wesentlichen gleiche Kapazität aufweisen.

Aufgrund dessen, dass gewöhnlich das Erdpotential des Wechsel- oder Drehstromnetzes, dessen Neutralleiter mit diesem Erdpotential verbunden ist, von dem Potential des Gehäuses - im Folgenden als Massepotential bezeichnet - verschieden ist, fällt über dem zwischen dem Neutralleiter und dem Gehäuse angeschlossenen Y-Kondensator eine Spannung ab. Im Falle einer 220 V-Netzspannung kann an diesem Y-Kondensator im ungünstigsten Fall eine Spannung von bis zu 110 V abfallen, wobei ein geringer Strom vom Masse- zum Erdpotential fließen kann. Mit anderen Worten: Die Erdspannung lässt einen geringen Fehler- bzw. Ableitstrom über die immer vorhandene Streukapazität eines an das Netzteil angeschlossenen schutzisolierten oder geerdeten Gerätes oder einer "geerdeten" Person abfließen.

Dieser geringe Fehler- bzw. Ableitstrom, welcher gewöhnlich kleiner als 5 mA ist, kann bei Personen unangenehme Berührungsreize bewirken und darüber hinaus empfindliche elektronische Bauteile eines an das Netzteil angeschlossenen Gerätes oder dessen periphere Schnittstelle störend beeinflussen.

US 2011/128087 A1 beschreibt ein Netzfilter zum Anschluss an eine Phasen-, eine Neutral- und eine Masseleitung, wobei Maßnahmen zur Beeinflussung der Eigenschaften des Netzfilters vorgeschlagen werden.

KR 2011 0061869 A offenbart eine Schaltung, welche geeignet ist, den Neutralleiter eines elektronischen Gerätes zu detektieren.

Aus JP 10 294633 A ist ein Netzfilter mit einem Y-Kondensator bekannt, der in Abhängigkeit der Potentialdifferenz zwischen einem Phasen- und einem Neutralleiter an den Neutralleiter geschaltet wird.

Der Erfindung liegt daher die Aufgabe zugrunde, ein Netzteil der eingangs genannten Art zu schaffen, welches derartige Nachteile vermeidet.

Diese Aufgabe wird dadurch gelöst, dass das Netzteil mit Mitteln versehen ist, welche dazu ausgebildet sind, mittels der Phasenlage eines Fehlerstromes, welcher einen von dem Gehäuseteil zum Erdpotential fließenden Ableitstrom repräsentiert, den Leiter zu detektieren, welcher mit dem Neutralleiter verbunden ist, und einen weiteren Y-Kondensator zwischen das Gehäuseteil und den detektierten Leiter zu schalten.

Die Erfindung geht von der Idee aus, kleine Fehlerströme zu erfassen und aus deren Phasenlage abzuleiten, welcher der beiden Leiter des Netzteiles an den Phasen- und welcher an den Neutralleiter angeschlossen ist. Ist bekannt, welcher Leiter an den Neutralleiter angeschlossen ist, kann der Fehlerstrom gezielt reduziert werden, indem zwischen diesen Leiter und das Gehäuse ein zusätzlicher Kondensator geschaltet wird, um das Spannungspotential an der Streukapazität zu verringern, was einen verbesserten Schutz des angeschlossenen Gerätes sowie der Person bzw. des Bedieners bedeutet.

In einer Ausgestaltung der Erfindung weist das Netzteil einen steuerbaren Schalter auf, der zum Anschließen des weiteren Y-Kondensators an den ersten oder zweiten Leiter vorgesehen ist. Mittels derartiger Maßnahmen kann sowohl eine symmetrische als auch eine asymmetrische Beschaltung der beiden Leiter des Netzteils verwirklicht werden, wobei in einer ersten Schalterposition bzw. -stellung der weitere Y-Kondensator an einen der beiden Leiter und in einer zweiten Schalterposition dieser weitere Y-Kondensator an den anderen Leiter angeschlossen ist. In einer dritten Schalterposition bleibt die symmetrische Beschaltung bestehen, d. h., der weitere Y-Kondensator ist in dieser Schalterstellung nicht angeschlossen, lediglich die beiden Y-Kondensatoren sind jeweils an einen der beiden Leiter angeschlossen.

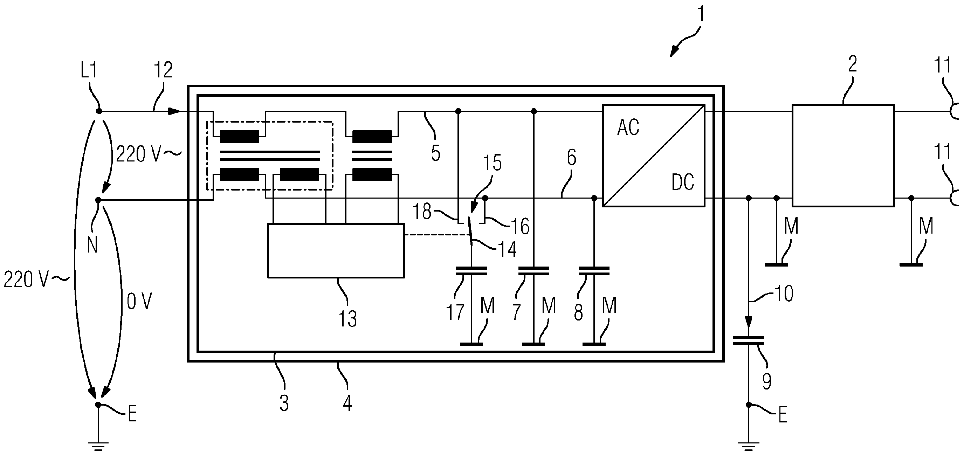

Die Erfindung wird nachfolgend anhand eines Ausführungsbeispiels unter Bezugnahme auf die einzige Figur der Zeichnung näher erläutert. Die Figur der Zeichnung zeigt in vereinfachter Form eine Anordnung mit einem Netzteil und einem Gerät.

Mit 1 ist ein schutzisoliertes Netzteil bezeichnet, welches aus einer diesem Netzteil 1 zugeführten Wechselspannung eines Wechsel- oder Drehstromnetzes eine Gleichspannung erzeugt. Diese Gleichspannung ist zur Versorgung eines an das Netzteil 1 angeschlossenen Gerätes 2 vorgesehen, welches ebenfalls schutzisoliert ist. Selbstverständlich kann dieses Gerät auch nicht schutzisoliert ausgebildet sein, wobei in diesem Fall das Gehäuse des Gerätes 2 an einen Schutzleiter des Wechsel- oder Drehstromnetzes angeschlossen ist. Das Gehäuse, welches zur Aufnahme der elektrischen und elektronischen Komponenten des Netzteils 1 vorgesehen ist, ist mit einem elektrisch leitenden Gehäuseteil 3 sowie einer Schutzisolierung 4 versehen, die das Gehäuseteil 3 umschließt. Das Netzteil 1 weist ferner Induktivitäten und Kapazitäten für eine an sich bekannte asymmetrische Funkentstörung auf, wobei erste und zweite Leiter 5, 6 des Netzteils 1 mit so genannten Y-Kondensatoren 7, 8 beschaltet sind. Dazu sind im vorliegenden Beispiel der Y-Kondensator 7 zwischen den ersten Leiter 5 und das elektrisch leitende Gehäuseteil 3 - im Folgenden als Massepotential M bezeichnet - und der zweite Y-Kondensator 8 zwischen den zweiten Leiter 6 und das Massepotential M geschaltet. An dieses Massepotential M ist ferner das Gerät 2 über eine der beiden DC-Ausgangsleitungen des Netzteils 1 angeschlossen, dessen andere DC-Ausgangsleitung, z. B. eine 24 V-Ausgangsleitung, ebenfalls mit dem Gerät 2 verbunden ist.

Im vorliegenden Ausführungsbeispiel wird angenommen, dass der erste Leiter 5 mit einem Phasenleiter L1 und der zweite Leiter 6 mit einem Neutralleiter N des Wechsel- oder Drehstromnetzes verbunden ist. Selbstverständlich können der erste Leiter 5 mit dem Neutralleiter und der zweite Leiter 6 mit dem Phasenleiter verbunden sein. Dies ist dann der Fall, wenn ein Anwender einen hier nicht dargestellten Netzstecker des Netzteils verpolt in eine Steckdose des Wechsel- oder Drehstromnetzes einsteckt. Der Neutralleiter N des Wechsel- oder Drehstromnetzes ist gewöhnlich mit einem Erdpotential E verbunden, wodurch eine O V-Spannung zwischen dem Neutralleiter N und dem Erdpotential anliegt, wobei zwischen dem Phasenleiter L1 und dem Neutralleiter N bzw. dem Erdpotential E des Wechsel- oder Drehstromnetzes üblicherweise 220 V anliegen.

Gewöhnlich lässt die Erdspannung, welche aufgrund des Potentialunterschiedes zwischen Erd- und Massepotential E, M bewirkt wird, einen geringen Fehler- bzw. Ableitstrom über eine immer vorhandene Streukapazität eines an ein Netzteil angeschlossenen schutzisolierten Gerätes, einer peripheren Schnittstelle dieses Gerätes oder einer "geerdeten" Person abfließen. Im vorliegenden Ausführungsbeispiel repräsentiert ein Ableitkondensator 9 eine derartige Streukapazität, wobei über den Ableitkondensator 9 ein Ableitstrom 10 vom Massepotential M zum Erdpotential E abfließt. Selbstverständlich kann aufgrund einer Streukapazität ein derartiger Ableitstrom auch vom Massepotential M einer peripheren Schnittstelle 11 des Gerätes 2 abfließen.

Um diesen Ableitstrom zu verringern, wird zunächst ein zu diesem Ableitstrom 10 proportionaler Fehlerstrom 12 erfasst und aus der Phasenlage dieses Fehlerstromes 12 abgeleitet bzw. detektiert, welcher der beiden Leiter 5, 6 an den Neutralleiter N angeschlossen ist. Dazu ist eine Mess- und Steuereinrichtung 13 vorgesehen, welche im vorliegenden Beispiel aufgrund der Phasenlage des Fehlerstroms 12 erkennt, dass der zweite Leiter 6 an den Neutralleiter N angeschlossen ist. Nach dieser Detektion des an den Neutralleiter N angeschlossenen Leiters - also des zweiten Leiters 6 - verringert die Einrichtung 13 den Ableitstrom 10 bzw. den Fehlerstrom 12, indem dazu die Einrichtung 13 den Spannungsabfall an der Streukapazität, d. h. am Ableitkondensator 9 vermindert, indem die Einrichtung 13 einen steuerbaren Schalter 14 derart steuert, dass dieser von einer Ruhestellung 15 in eine Schalterstellung 16 wechselt, wodurch ein weiterer mit dem Massepotential M verbundener Y-Kondensator 17 an den zweiten Leiter 6 angeschlossen wird. Dies bedeutet, dass nach der Detektion des an den Neutralleiter angeschlossenen Leiters von einer symmetrischen Beschaltung der beiden Leiter in eine asymmetrische Beschaltung gewechselt bzw. umgeschaltet wird. Aufgrund dessen, dass zwischen den zweiten Leiter 6 und das Gehäuseteil 3 (Massepotential) ein weiterer Kondensator 17 geschaltet ist, wird das Spannungspotential am Ableitkondensator 9 verringert, was einen verbesserten Schutz des angeschlossenen Gerätes 2, dessen peripherer Schnittstelle 11 sowie der Person bzw. des Bedieners bedeutet.

Für den Fall, dass ein Anwender einen hier nicht dargestellten Netzstecker des Netzteils 1 verpolt in eine Steckdose des Wechsel- oder Drehstromnetzes einsteckt, ist der erste Leiter 5 mit dem Neutralleiter N verbunden. In diesem Fall steuert selbstverständlich die Einrichtung 13 nach der Detektion des an den Neutralleiter N angeschlossenen Leiters 5 den Schalter 14 derart, dass der Schalter 14 in einer Stellung 18 den weiteren Kondensator 17 mit dem ersten Leiter 5 verbindet.

## Patentansprüche

1. Schutzisoliertes Netzteil, welches zur Erzeugung einer Versorgungsspannung für ein elektrisches Gerät (2) vorgesehen ist,
- mit einem elektrisch leitenden Gehäuseteil (3), welcher von einer Schutzisolierung (4) umschlossen ist,
- mit einem ersten und einem zweiten elektrischen Leiter (5, 6), die zum Verbinden eines der elektrischen Leiter (5, 6) mit einem Phasen(L1)- und des anderen der elektrischen Leiter (5, 6) mit einem Neutralleiter (N) eines geerdeten Wechsel- oder Drehstromnetzes vorgesehen sind, und
- mit einem ersten und einem zweiten Y-Kondensator (7, 8), die für eine asymmetrische Funkstörentstörung des Netzteils (1) vorgesehen sind und von denen einer zwischen den ersten Leiter (5) und das Gehäuseteil (3) und der andere zwischen den zweiten Leiter (6) und das Gehäuseteil (3) geschaltet ist,
**dadurch gekennzeichnet, dass** das Netzteil (1) mit Mitteln (13, 14) versehen ist, welche zur Reduzierung eines Fehlerstroms (12) dazu ausgebildet sind,
- mittels der Phasenlage des Fehlerstromes (12), welcher einen von dem elektrisch leitenden Gehäuseteil (3) zu einem Erdpotential (E) fließenden Ableitstrom (10) repräsentiert, den Leiter (5, 6) zu detektieren, welcher mit dem Neutralleiter (N) verbunden ist, und
- einen weiteren Y-Kondensator (17) zwischen das elektrisch leitende Gehäuseteil (3) und den detektierten Leiter (5, 6) zu schalten.

2. Schutzisoliertes Netzteil nach Anspruch 1, **dadurch gekennzeichnet, dass** das Netzteil (1) einen steuerbaren Schalter (14) aufweist, der zum Anschließen des weiteren Y-Kondensators (17) an den ersten oder zweiten Leiter (5, 6) vorgesehen ist.

## Claims

1. Totally insulated switched mode power supply, which is intended to produce a supply voltage for an electrical device (2),
- comprising an electrically conductive housing part (3), which is enclosed by a total insulation (4),
- comprising a first and a second electrical conductor (5, 6), which are provided for connection of one of the electrical conductors (5, 6) to a phase conductor (L1) and of the other of the electrical conductors (5, 6) to a neutral conductor (N) of a grounded AC or three-phase power supply system, and
- comprising a first and a second Y capacitor (7, 8), which are provided for asymmetrical interference suppression of the switched mode power supply (1) and of which one is connected between the first conductor (5) and the housing part (3) and the other is connected between the second conductor (6) and the housing part (3),
**characterized in that** the switched mode power supply (1) is provided with means (13, 14) which, to reduce a fault current (12), are designed to
- detect the conductor (5, 6), which is connected to the neutral conductor (N), by means of the phase angle of the fault current (12) which represents a leakage current (10) flowing from the electrically conducting housing part (3) to a ground potential (E), and
- connect a further Y capacitor (17) between the electrically conducting housing part (3) and the detected conductor (5, 6).

2. Totally insulated switched mode power supply according to Claim 1, **characterized in that** the switched mode power supply (1) has a controllable switch (14), which is provided for connecting the further Y capacitor (17) to the first or second conductor (5, 6).

## Revendications

1. Bloc d'alimentation à isolation de protection, qui est prévu pour produire une tension d'alimentation pour un appareil (2) électrique,
- comprenant une partie (3) conductrice de l'électricité, qui forme boîtier et qui est entourée d'un isolant (4) de protection,
- comprenant un premier et un deuxième conducteurs (5, 6) électriques, qui sont prévus pour relier l'un des conducteurs (5, 6) électriques à un conducteur (L1) de phase et l'autre des conducteurs (5, 6) électriques à un conducteur (N) de neutre d'un réseau à courant alternatif ou à courant triphasé
et
- comprenant un premier et un deuxième condensateurs en Y (7, 8), prévus pour une perturbation dissymétrique par parasite du bloc (1) d'alimentation et dont l'un est monté entre le premier conducteur (5) et la partie (3) de boîtier et l'autre entre le deuxième conducteur (6) et la partie (3) de boîtier,
**caractérisé en ce que** le bloc (1) d'alimentation est pourvu de moyens (13, 14), constitués pour réduire un courant (12) de défaut,
- au moyen de la position en phase du courant (12) de défaut, qui représente un courant (10) de fuite allant de la partie (3) conductrice de l'électricité du boîtier à un potentiel (E) de terre pour détecter le conducteur (5, 6), qui est relié au conducteur (N) de neutre et
- pour monter un autre condensateur en Y (17) entre la partie (3) conductrice de l'électricité du boîtier et le conducteur (5, 6) détecté.

2. Bloc d'alimentation à isolation de protection suivant la revendication 1, **caractérisé en ce que** le bloc (1) d'alimentation a un interrupteur (14) pouvant être commandé, prévu pour connecter l'autre condensateur en Y (17) au premier ou au deuxième conducteurs (5, 6).
